# EUROPEAN PATENT APPLICATION

(11) **EP 1 089 499 A2**
(43) Date of publication of application: **04.04.2001**
(21) Application number: 00121203.4
(22) Date of filing: 28.09.2000
(51) Int. Cl.: H04L 12/56

(54) **Radio communications network system and its radio terminal**

(30) Priority: 30.09.1999 JP 28034799
(71) Applicant: KABUSHIKI KAISHA TOSHIBA, Kawasaki-shi (JP)
(72) Inventor: Takaoka, Toshiaki, Kabushiki Kaisha Toshiba, Minato-ku, Tokyo 105-8001 (JP)
(74) Representative: HOFFMANN - EITLE

(57) **Abstract**

By inputting an enquiry command at a newly subscribing radio terminal (TA), an enquiry packet is transmitted toward piconets (PA, PB and PC) at a surrounding area and, in response to this enquiry, an FHS packet is sent back from respective radio terminals in the piconets (PA, PB, PC) and, from this FHS packet, a synchronization word representing a system ID of the piconet and ID address of a sending-back side radio terminal are extracted and such synchronization words and ID addresses are sorted for the respective piconets (PA, PB and PC) and displayed on an LCD (34).

## Description

The present invention relates to a radio network adopting a short distance radio data communications technique called the Bluetooth for instance and its radio terminal.

In recent times, various kinds of radio networks have been developed and reduced to practice with the development of the communications technique and diversification of current needs and, among them, there is a radio network adopting a short-distance radio data communications technique called the Bluetooth.

The Bluetooth constitutes one of short-distance radio communication protocols utilizing an Industrial Science Medical (ISM) band of 2.4 GHZ and is used for connection mainly between a personal computer and the periphery, such as a printer, modem and keyboard, and between a cellular phone and the personal computer. The adoption of the Bluetooth can eliminate the need to use any cable for connection between these devices and can largely improve the user-friendliness of these kinds of devices.

The Bluetooth uses a spectrum spread communications technique of a frequency hopping system and 79 channels of 1 MHZ width are used in which case these channels are switched 1600 times at max. per second. By doing so, it is possible to prevent an interference against other radio communications using the same ISM band. There are three classes for transmission output, that is, class 1 being + 20 dBm (maximum transmission distance 100m), class 2 being + 4 dBm and class 3 being O dBm (maximum transmission distance 10 m). The maximum data transmission speed is 1 Mbps but, effectively, at a time of asymmetric transmission, 721 Kbps for a down channel and 57.6 Kbps for an up channel. At a time of symmetric transmission, 432.6 Kbps is involved for down and up channels each. As the multiplexing system at the down and up channels, a TDD (Time Division Duplex system is used).

Those compatible units for the Bluetooth are divided into a master terminal for deciding a frequency hopping pattern and seven slave terminals at max obeyed by the master terminal. The radio network comprised of the master and slave terminals is called "a piconet". The master terminal can also serve as a slave terminal for another piconet. Through the utilization of this function, a plurality of piconets can be connected like "a string of beads" to provide a still larger radio network.

This is called a "scatternet". In the respective piconet, the master/slave relation can be varied freely. It means that the master terminal can change into the slave terminal. The slave terminal becomes the master terminal as well.

In the Bluetooth, if there are a plurality piconets in the neighborhood of the terminal who tires to connect with one desired piconet, it may be afraid that the terminal connects with undesired piconet by mistake. In such a case, it is necessary to cancel the connection and try to connect with the desired piconet once again. If frequent connection/disconnection operations are done, especially at the movement of the terminal, then the connection operation becomes cumbersome. Further, more power is wasted at the time of each connection and disconnection. The waste of power is fatal thing especially for mobile terminals such as cellular phones.

A first object of the present invention is to provide a network system and its terminal which can be aware of the configuration of the network before the terminal connects the terminal, and allows the terminal to be positively connected with desired network. By doing so, it can ensure a simpler connection and achieve a lowering a waste of power in the terminal.

A second object of the present invention is to provide a network and its terminal which can be easily aware of the configuration of the network after connection operation has been done.

In order to achieve the first object, a first invention is directed to sending out an enquiry information for enquiring the arrangement or configuration of a network from a first terminal newly subscribing to the network to a second terminal already registered to the network in accordance with the inputting of an enquiry command and, when the enquiry information comes from the first terminal, sending, from a second terminal, response information containing information representing its own attribute back to the first terminal, receiving, on the first terminal, the response information sent back from the second terminal after the enquiry information has been transmitted and generating information representing the configuration of the network on the basis of the attribute information contained in the response information and displaying it.

According to the first invention, when enquiry information is sent out from a newly subscribing terminal, attribute information is sent from respective terminals in a radio network back to an enquiring-side terminal and, based on the attribute information of the respective terminals of a sending-back side, information representing the configuration of the network is generated and displayed. In the case where a terminal is newly subscribed/registered onto the network, the user of this terminal or system administrator of the radio network can beforehand confirm the configuration of the surrounding radio network.

Stated in more detail, the display means classifies, for each radio network, the attribute information of a plurality of response information sending-back terminals and displays it. By doing so, the user or system administrator can more clearly grasps the configuration of the networks on the basis of the display information.

Further, regarding to a plurality of terminals likely to join the network, a conversion table is provided to store their identification codes and character data representing the contents of their attributes in a mutual correspondence relation. In the case where the attribute information contained in the response information is an identification code, the character data representing the contents of the attribute corresponding to the identification code is read out from the conversion table and displayed.

By doing so, the user of the terminal or system administrator of the network can promptly grasp the contents of the attributes of the terminals constituting a network, that is, the vendor name and kind name, simply by looking at the display contents. Therefore, it is not necessary to confirm the contents of the attribute by referring to a code matching table and it is possible to largely enhance the operation efficiency.

Further, a means is provided, at the first terminal, for storing and holding the attribute information contained in the response information sent back from the second terminal or information representing the configuration of the network generated from the display means and, when a command for requesting a subscription/registration onto the network is input, a sequence for effecting a subscription/registration of a self terminal relative to the second terminal is effected based on the stored and held information.

Since, by doing so, the subscription/registration sequence is effected based on the stored and held information, the user and system administrator need not input the address information of the network and radio terminal of "subscribed/registered" side by a manual operation and it is possible to complete registration processing easily for a short time without an error.

In order to achieve a second object, a second invention is directed to, in a state that a terminal is subscribed/registered onto a network, sending a display request to any other terminal in the radio network in accordance with the inputting of a display request command and, when the display request comes from the other terminal in the network, displaying information at least representing a location of the self terminal in response to the display request.

Stated in more detail, the radio terminal displays information representing a location of its own with information representing its own function as a master or slave terminal.

According to the second invention, therefore, after, for example, a terminal has been newly subscribed/registered onto a network, if a display request is transmitted from the newly subscribed/registered terminal to already subscribed terminals, then at the already subscribed terminals the information representing the location of their own is displayed. Therefore, the user or system administrator can easily confirm whether or not the newly subscribed/registered terminal is surely registered on a desired radio network. Further, it is also possible to confirm which terminal serves as a master terminal and which serves as a slave terminal.

Further, this invention is also characterized in that, in the case where a display request comes from any other terminal in a network, a self terminal sends response information including information representing its own attribute back to the radio terminal of a display request transmitting side and, when, in the display request transmitting terminal, the above-mentioned response information is sent back, attribute information contained in the response information is displayed.

By doing so, after the terminal has been newly subscribed/registered on the network, when a display request is sent from the newly subscribed/registered terminal to the already subscribed terminal, then attribute information of the already subscribed nit is sent back to the terminal of a "display request" side and displayed. For this reason, the user of the newly subscribed/registered terminal or system administrator can confirm the attribute information of terminals in a network subscribed by a self terminal, that is, he or she can confirm the attribute information of these terminals on his or her own display means after the subscription/registration has been achieved. Thus, the user or system administrator can easily confirm whether or not the newly subscribed/registered terminal is surely registered on a desired network.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagrammatic view showing a radio network according an embodiment of the present invention;
FIG. 2 is a schematic view showing a cellular phone set corresponding to a W-CDMA system predictably applicable to one of radio terminals;
FIG. 3 is a sequence diagram showing a sequence of an enquiry operation and its response operation;
FIG. 4 shows one example of an FHS packet format;
FIG. 5 shows a first table on piconet information obtained by an enquiry procedure;
FIG. 6 is a sequence diagram showing a procedure of a main controller's canceling the use of an enquiry;
FIG. 7 is a sequence diagram showing a procedure when all enquiries are ended;
FIG. 8 is a flow chart showing a display control procedure of an enquiry result and its contents;
FIG. 9 shows a second table on piconet information obtained by an enquiry procedure;
FIG. 10 is a sequence diagram showing a procedure of an ACL link connection sequence;
FIG. 11 is a flow chart showing an ACL/ACO connection/disconnection control procedure and its control contents;
FIG. 12 is a sequence diagram showing a display command transfer procedure;
FIG. 13 shows one example of a display command packet format;
FIG. 14 shows one example of a display command response packet format;
FIG. 15 is a timing chart showing an SCO link connection operation; and
FIG. 16 is a flow chart showing a display control procedure of a radio terminal, and its contents, when a display command is received.

One embodiment of the present invention will be described below with reference to the accompanying drawing.

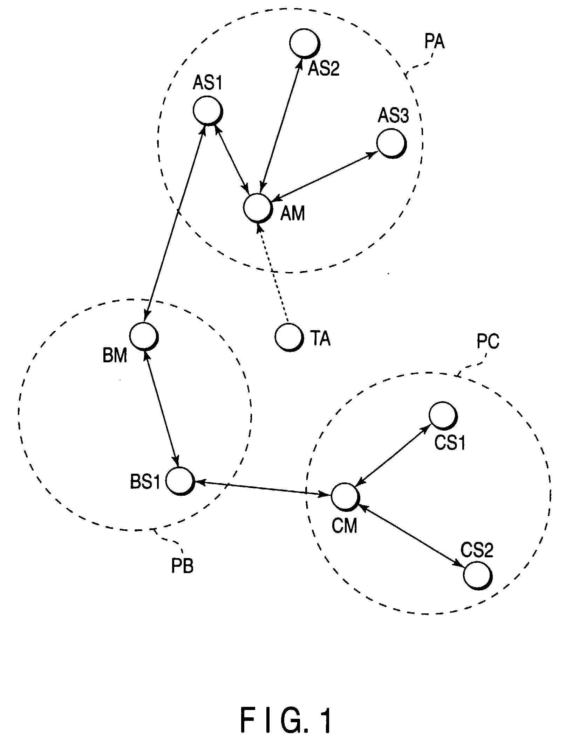

FIG. 1 is a diagrammatic view showing one embodiment of a radio network according to the present invention.

The radio network of the present embodiment adopting the Bluetooth (hereinafter referred to as BT) has three piconets PA, PB and PC. The piconet, PA comprises a radio terminal AM serving as a master terminal and three slave radio terminals AS1 to AS3 connected to the master radio terminal AM via a radio channel. The piconet PB comprises a radio terminal BM serving as a master terminal and one slave radio terminal BS1 connected to the master radio terminal BM via a radio channel. The piconet PC comprises a radio terminal CM serving as a master terminal and two slave radio terminals CS1, CS2 connected to the master radio terminal CM via a radio channel.

To the master radio terminal BM of the piconet PB the radio terminal AS1 of the piconet PA is connected as a slave terminal and, to the master radio terminal CM of the piconet PC, the unit BS1 of the piconet PB is connected as a slave terminal. By this arrangement, the piconets PA, PB, PC constitute a scatternet.

The master/slave relation of the respective radio terminals can be changed at any time in the case where there occur any radio frequency noise, a fall in battery power, etc.

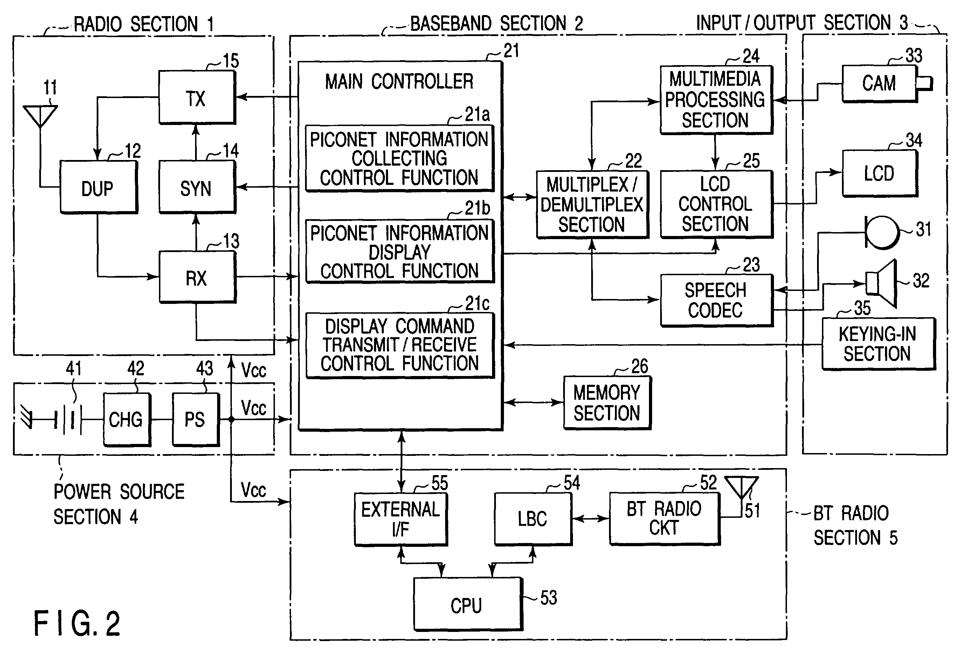

The radio terminal as set out above is so constructed as will be set out by way of example below. FIG. 2 is a schematic diagram showing a cellular phone set corresponding to a W-CDMA (Wideband-Code Division Multiple Access) system predicable for use as one of the radio terminals.

That is, this cellular phone set comprises a radio section 1, baseband section 2, input/output section 3, power source section 4 and BT radio section 5.

In FIG. 2, a radio frequency signal arriving from a base station of a mobile communications system, not shown, via a radio channel is received at an antenna 11 and then input to a receiving circuit (RX) 13 through an antenna common unit (DUP) 12. The receiving circuit 13 has a high frequency amplifier, frequency converter, spectrum reverse-spreading circuit and demodulator.

The radio frequency signal is low noise amplified by a low noise amplifier. Then, at the frequency converter, it is mixed with a receive local oscillation signal generated from a frequency synthesizer (SYN) 14 and, by doing so, a resultant signal is down-converted to a receive intermediate frequency signal or a receive baseband signal. The down-converted receive signal is reverse spreaded by the spectrum reverse-spreading circuit and subjected by the demodulator to a digital modulation. As the demodulation system use is made of, for example, an orthogonal demodulation system corresponding to a QPSK system. It is to be noted that the frequency of the receive local oscillation signal generated from the frequency synthesizer 14 is designated from a main controller 21 in the baseband section 2.

The demodulated signal output from the demodulator is input to the baseband section 2. The baseband section 2 comprises the main controller 21, multiplex-demultiplex section 22, voice coding/decoding section (hereinafter referred to as a voice codec) 23, multimedia processing section 24 and LCD control section 25.

The demodulated signal is identified by the main controller 21 whether it is control information or multimedia information. If it is identified to be multimedia information, it is sent to the multiplex-demultiplex section 22 where it is demultiplexed into voice data and image data. The voice data is input to the voice codec 23 where it is voice decoded. The decoded voice signal is output by a speaker 32 in the input/output section 3 as a voice of a sufficient level. On the other hand, the image data is input to the multimedia processing section 24 where it is subjected to image decode processing. The decoded image signal is supplied through the LCD control section 25 to an LCD 34 in the input/output section 3.

The received image data is stored in RAM in the main controller 21 as required. Further, LCD 34 displays various management information representing an operative state of this self terminal output from the main controller 21. As the management information displayed, there are, for example, telephone directory data, a detection level of a received electric field intensity, and a residual amount of a battery unit.

On the other hand, a user's talk voice signal output from a microphone 31 in the input/output section 3 is input to the voice codec 23 in the baseband section 2 where, after being voice coded, it is input to the multiplex-demultiplex section 22. An image signal output from a camera (CAM) 33 is input to the multimedia processing section 24 in the baseband section 2 where it is subjected to image code processing. A resultant signal is input to the multiplex-demultiplex section 22. The multiplex-demultiplex section 22 multiplexes the coded voice data and image data on a predetermined format. And the multiplexed transmit data are input from the main controller 21 to the transmitting circuit (TX) in the radio section 1.

The transmitting circuit 15 has a modulator, spectrum spreading circuit, frequency converter and transmit power amplifier. The transmit data, first being subjected by the modulator to a digital modulation, is subjected by the spectrum spreading circuit to spectrum spread processing with the use of a predetermined spread code. As the modulating system use is made of the QPSK system. A transmit signal after being subjected to the spectrum spread processing is mixed with a transmit local oscillation signal generated from the frequency synthesizer 14 to allow it to be up-converted by the frequency converter to a radio transmit band signal. And it is amplified by a transmit power amplifier to a predetermined transmit level and then supplied through the antenna common circuit 12 to the antenna 11 where it is transmitted to a base station not shown.

It is to be noted that the power source section 4 has a battery 41, such as a lithium ion battery, charging circuit (CHG) 42 for charging the battery unit 41 and voltage generation circuit (PS) 43. The voltage generation circuit 43 is comprised of a DC/DC converter and generates a predetermined power source voltage Vcc based on the output voltage of the battery.

The BT radio section 5 has a BT radio circuit 52 equipped with an antenna 51 for BT communication, CPU 53, link baseband controller (LBC) 54, and external interface 55. Of these, CPU 53 and LBC 54 generally control the BT communications. The BT communications control includes processing for establishing a radio link to a radio terminal of a communication party, code/decode processing of the transmit and receive signals, etc. That is, CPU 53 and LBC 54 function as a link manager. CPU 53 and external interface 55 allow a control signal and transmit/receive data associated with the BT communications to be transferred relative to the main controller 21 functioning as a host command interface (HCI).

The BT radio circuit 5 subjects a carrier signal to a digital modulation by a transmit data output from LBC 54 and the modulated carrier signal is spectrum-spread by the frequency hopping. The transmit signal, after being amplified to a transmit output level below a regulated value, is transmitted from the antenna 51 toward the radio terminal. Further, a radio signal coming from the radio terminal is received via the antenna 51 and subjected to spectrum reverse spread processing and it is digitally modulated and input to LBC 53.

Incidentally, the cellular phone set of the present embodiment has, as new functions associated with the BT communications control, a piconet information collection control function 21a, piconet information display control function 21b and display command transmit/receive control function 21c.

When the user inputs an enquiry command in such a state not subscribed onto the piconets PA, PB, PC, the piconet information collection control function 21a implements the control for collecting information relating to the surrounding piconets.

That is, when an enquiry command is input from the keying-in section 35, an enquiry request is made to CPU 53 in the BT radio section 5. CPU 53 and LBC 54 generate an enquiry ID packet in response to the enquiry request and transmit the enquiry ID packet from the BT radio circuit 51 to the surrounding piconets PA, PB and PC.

Further, in response to the enquiry ID packet the surrounding radio terminals send back FHS packets and the FHS packets are received by LBC 54 and CPU 53 in the BT radio circuit section 51. And the contents of the FHS packets from the respective received radio terminals are transferred from the external interface 55 to the main controller 21.

The piconet information display control function 21b implements the control of displaying the information collected by the piconet information collection control function 21a on LCD 34 and has first and second display modes.

In the first display mode, the main controller 21 extracts, from the FHS packet of the respective radio terminal, an ID address of the sending-back side radio terminal and ID code inherent in the corresponding piconet and edits these for each piconet and displays its code on LCD 34.

In the second mode, the main controller 21 cheeks a memory section 26 on the basis of the ID code of the sending-back side radio terminal and ID code for identifying the piconet both extracted from the FHS packet of the respective radio terminal. It reads out character data corresponding to the ID code from the memory section 26 and displays the character data on LCD 34. That is, the received ID address of the radio terminal and the received ID code inherent in the piconet are converted to the character data representing such as a vendor name of the radio terminal, a kind of the product, and/or a product number. The main controller 21 displays such character data on LCD 34.

The radio network and operation of its associated radio terminals thus arranged will be explained below.

Let it be assumed that, as shown in FIG. 1, a radio terminal TA comprised of a cellular phone set is going to be connected with the piconet PA. In this case, in order to know the arrangement or configuration of the piconets PA, PB and PC beforehand, the user of the radio terminal TA or a system administrator of the radio network, first, performs a keying operation to input a predetermined enquiry command.

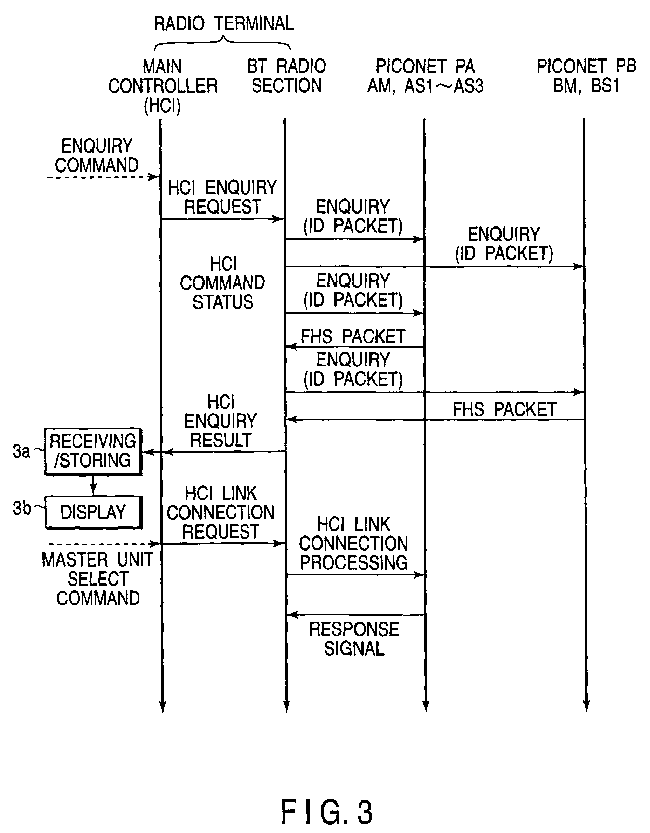

Then, as shown in FIG. 3, an HCI enquiry request is notified from the main controller (HCI) 21 to CPU 53 in the BT radio section 5. In response to this request, an enquiry packet (ID packet) is generated in CPU 53 in the BT radio section 5. Enquiry packet is transmitted from the BT radio circuit 52 toward respective piconets PA, PB, PC.

The respective radio terminals AM, AS1 to AS3, BM, BS1, CM, CS1, CS2 of the respective piconets PA, PB, PC monitor an arrival of the BT radio signal in a random timing. When, in this state, any enquiry packet comes from the radio terminal TA, the respective radio terminals AM, AS1 to AS3, BM, BS1, CM, CS1, CS2 receiving this enquiry packet generate FHS packets and send them back to the radio terminal TA.

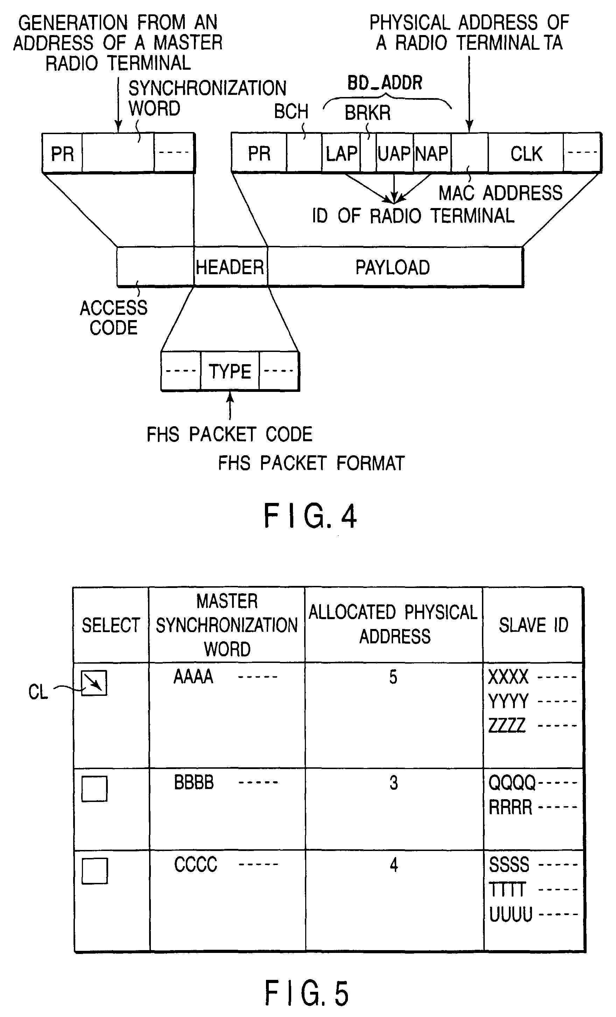

As shown in FIG. 4, the FHS comprises an address code, a header and a payload. A synchronization word generated from an address of a master radio terminal is inserted into the access code. An ID address of the radio terminal, which received the enquiry packet and a MAC address, which is allocated to the radio terminal TA are inserted into the payload. The ID address of the radio terminal is unique to network system and is called "BD ADDR (Bluetooth Device Address)". The ID address comprises a lower-order address, upper-order address and additional address. These are inserted in a distributed manner into an LAP field, UAP field and NAP field in the payload.

Incidentally, in the header of the FHS packet a field (TYPE) representing the type of the packet is provided and, into the type field, an FHS packet code is inserted.

The above-mentioned radio terminal TA, after transmitting an enquiry packet, monitors the sending back of the FHS packets from the respective radio terminals AM, AS1 to AS3, BM, BS1, CM, CS1, CS2. When, in this state, the FHS packets come from these radio terminals, they are sequentially received. At this time, a decision of whether or not the received packet is the FHS packet is made based on the FHS packet code inserted into the type field of the header.

Upon receipt of the above-mentioned FHS packet, the radio terminal TA establishes a synchronization at LBC 54 on the basis of a clock CLK inserted into the payload and, thereafter, CPU 53 decodes the synchronization word, ID address and MAC address inserted into the FHS packet and the decoded information is informed to the main controller 21.

The main controller 21 stores the decoded synchronization word, ID address and MAC address, at a step 3a, in its memory and, after being classified for the respective piconets PA, PB and PC, at step 3b, sends them through the LCD control section 25 to LCD 34 where they are displayed. FIG. 5 shows one example of their display result. As shown in FIG. 5, the ID addresses of the respective slave radio terminals AS1 to AS3, BS1, CS1, CS2 are displayed, for the respective piconets PA, PB, PC, in a manner to correspond to the synchronization words of their master radio terminals AM, BM, CM.

Thus, the user of the radio terminal TA or system administer of the radio network can grasp, before his or her subscription/registration operation, the arrangement of the respective piconets PA, PB, PC from the information displayed on LCD 34. The displayed information is erased by an erase operation of the user or administrator. Or the display may be automatically erased at the elapsing of a predetermined time.

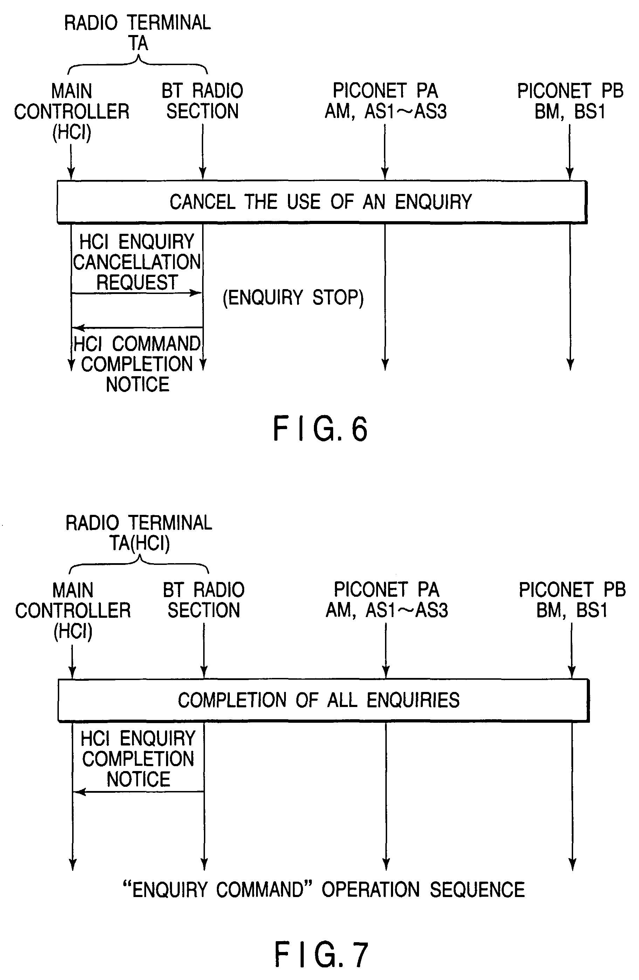

In the case where, at the radio terminal TA, a command for canceling the use of an enquiry sequence is input in an intervening time, an HCI enquiry cancellation request is notified from the main controller 21 to CPU 53 of the BT radio section 5 as shown in FIG. 6. Upon receipt of the HCL enquiry cancellation request, CPU 53 of the BT radio section 5 transmits an HCI command completion notice to the main controller 21.

Further, when an enquiry sequence for all the surrounding radio terminals is completed, the HCI enquiry completion notice is sent from CPU 53 of the BT radio section 5 to the main controller 21. Upon receipt of this notice the main controller 21 allows an enquiry result as set out above to be displayed.

In the above-mentioned display control operation (first display mode), the identification word and ID address coming from the respective radio terminal are displayed intact.

According to the present invention, the second display mode is provided so as to improve the way of display. That is, a display data conversion table is provided in the memory section 26. The conversion table is such that, with respect to the respective one of a plurality of other radio terminals which constitute a piconet, the synchronization word and ID address and character data representing the vendor name and/or kind name of the product are stored in a mutual correspondence relation.

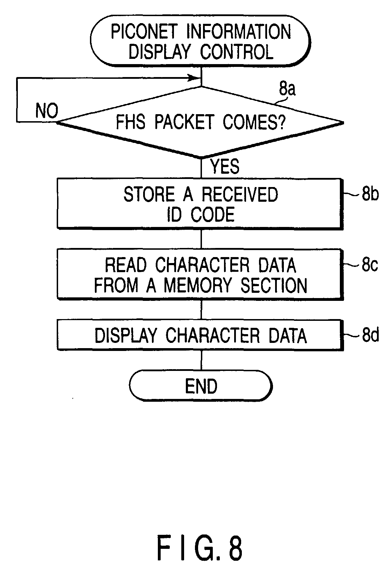

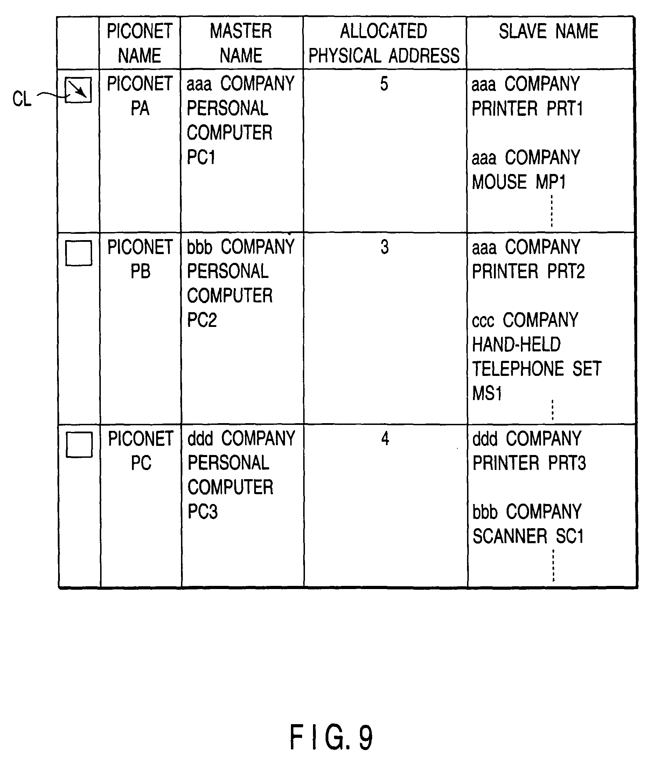

The main controller 21 is such that, when it detects an arrival of an FHS packet transmitted by the radio terminal at step 8a as shown in FIG. 8, it extracts a synchronization word and ID address from the FHS packet and stores them in the internal memory of the main controller 21 at step 8b. When such FHS packets are received from radio terminals at the surrounding area, the main controller 21 gains access to the memory 26 on the basis of the synchronization word and ID address received from the radio terminal and reads out character data representing the vendor name and kind name of the radio terminal corresponding to the synchronization word and ID address at step 8c. After classifying and sorting such character data for each piconet, the main controller allows them to be displayed, at step 8d, on LCD 34 through the LCD control section 25. FIG. 9 shows one example of a display result.

By adopting the second display mode, the user of the radio terminal TA or system administrator of the radio network can promptly grasp the vendor names and kind names of the mater units and slave terminals of the respective piconets PA, PB, PC simply by looking at the contents displayed on LCD 34. By doing so, it is not necessary for the user of the terminal TA to look at the code matching table and it is possible to largely enhance the operation efficiency involved.

After grasping the arrangement or in other words configuration of the respective piconets PA, PB, PC, the user of the radio terminal TA or system administrator performs a subscription/registration operation relative to a desired piconet.

If, for example, the piconet PA is a desired one for subscription, then the piconet PA is selectively designated by a cursor CL, as shown in FIG. 5 or 9, out of data items of the respective piconets PA, PB, PC displayed on LCD 34 of the radio terminal TA and the master radio terminal AM or one (for example, AS2) of the slave radio terminals in the piconet PA is selectively designated.

By doing so, at the radio terminal TA, a connection request is sent from the main controller 21 to the BT radio section 5 and, hereinafter, in accordance with this request, control is effected such that, at the BT radio section 5, an ACL link is established relative to the slave radio terminal AS2 of the piconet PA in accordance with an asynchronous connectionless type connection (hereinafter referred to as an ACL link connection) procedure.

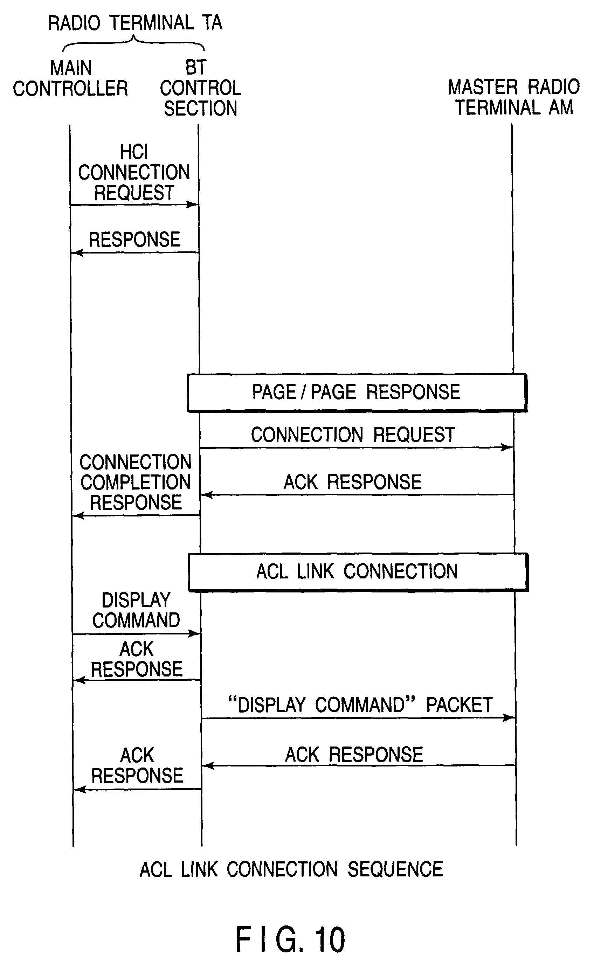

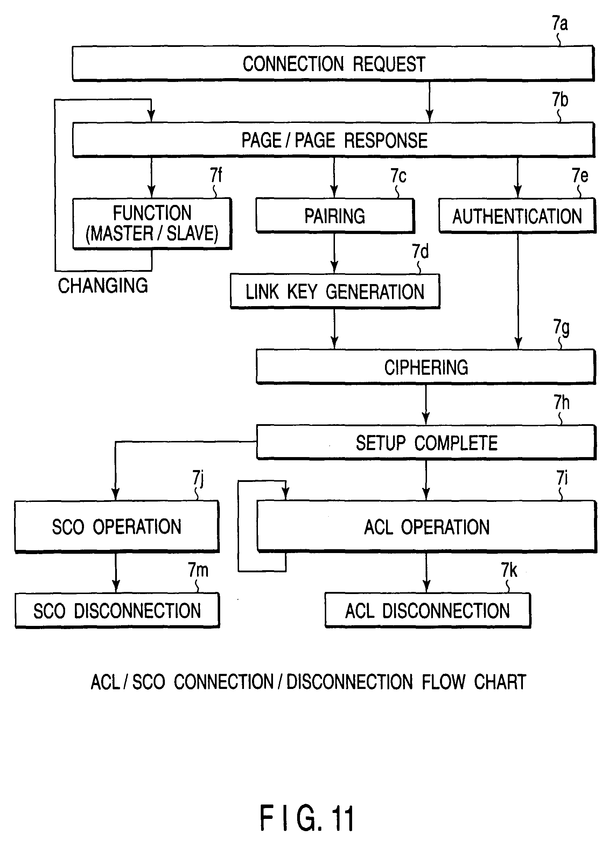

FIG. 10 shows a sequence diagram showing its control procedure and FIG. 11 is a flow chart showing an ACL connection/disconnection procedure in the BT radio section 5 and its contents. That is, the BT radio section 5 is so operated that, when the ACL connection request is received from the main controller 21 at step 7a, page/page response processing is performed relative to a master radio terminal AM of a link connection party (step 7b). After the page/page response processing is completed, the radio terminal TA sends a request for connection to the master radio terminal AM or slave radio terminal AS2 of the link connection party and receives a corresponding ACK response. At this time, at the BT radio section 5 of the radio terminal TA, AM or AS2 pairing is done at step 7c and a link key is generated at step 7d or, after the performing of an authentication at step 7e, cipher processing is done at step 7g. It is to be noted that the change of the master/slave relation is done at step 7f after the page/page response processing has been completed.

After such setup has been completed (step 7h), an AC link connection operation has been done between the radio terminal TA and the master radio terminal AM or slave radio terminal AS2 (step 7i), thus allowing radio communication to be done between the radio terminal TA and the master radio terminal AM or slave radio terminal AS2. Incidentally, as the radio link connection format, there is not only the ACL link connection procedure but also a synchronization connection type link connection (hereinafter referred to as an SCO link connection) procedure and this SCO link connection procedure is performed at step 7j.

By establishing the radio communication link as set out above, the radio terminal TA allows a subscription/registration operation to be done on the piconet PA. That is, the subscription/registration processing is automatically done on the piconet PA simply by selectively designating one of the piconet information item displayed on LCD 34 of the radio terminal TA by the cursor CL. Thus the user or system administrator, at the subscription/registration operation of the radio terminal TA, can obviate the need to input the system ID of the piconet of a subscription/registration side, ID address, etc., of the radio terminal from the keyboard section and it is, therefore, possible to complete the registration operation by a simpler operation.

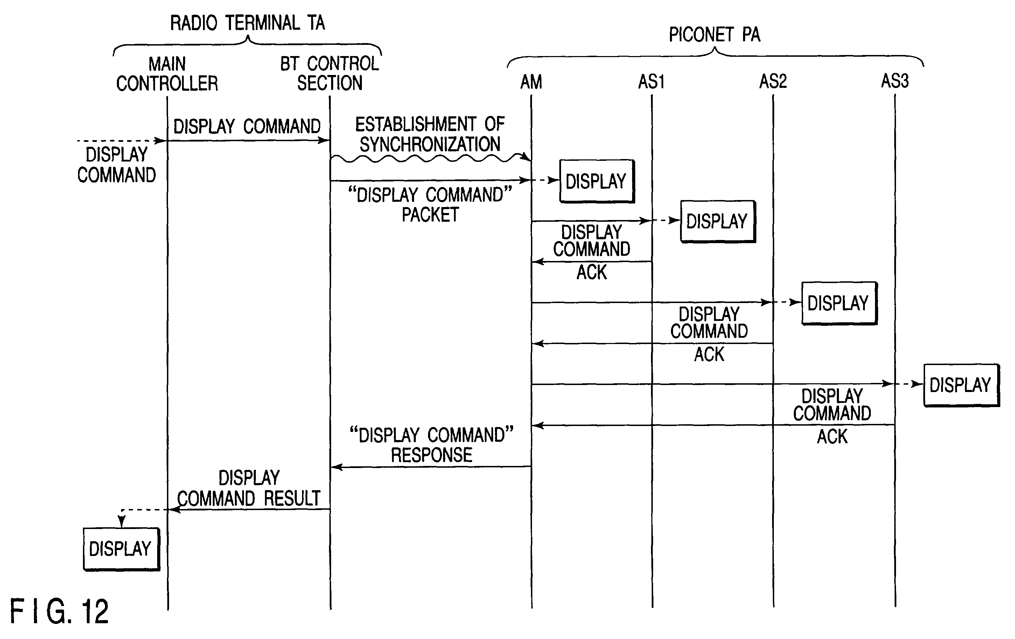

Then, after the new subscription/registration of the radio terminal TA has thus been completed, the user of the radio terminal TA or system administrator of the radio network performs a display command transmitting procedure so as to see whether or not the radio terminal TA is truly subscribed/registered on a desired piconet PA. FIG. 12 is a sequence diagram showing this display command transmitting procedure.

That is, the user or system administrator inputs a specific display command by operating the keyboard section 35 at the radio terminal TA. As the display command is made for requesting, the radio terminals AM, AS1 to AS3, to display information representing their function. The master radio terminal AM is designated as a transmitting destination of the display request command.

Then the display request command is notified from the main controller 21 to the BT radio command 5. Upon receipt of it, CPU 53 of the BT radio section 5 generates a 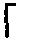 display command 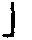 packet on the basis of the piconet information stored in the internal memory of the main controller 21 and allows it to be transmitted from the BT radio circuit 52 toward the master radio terminal AM in the piconet PA.

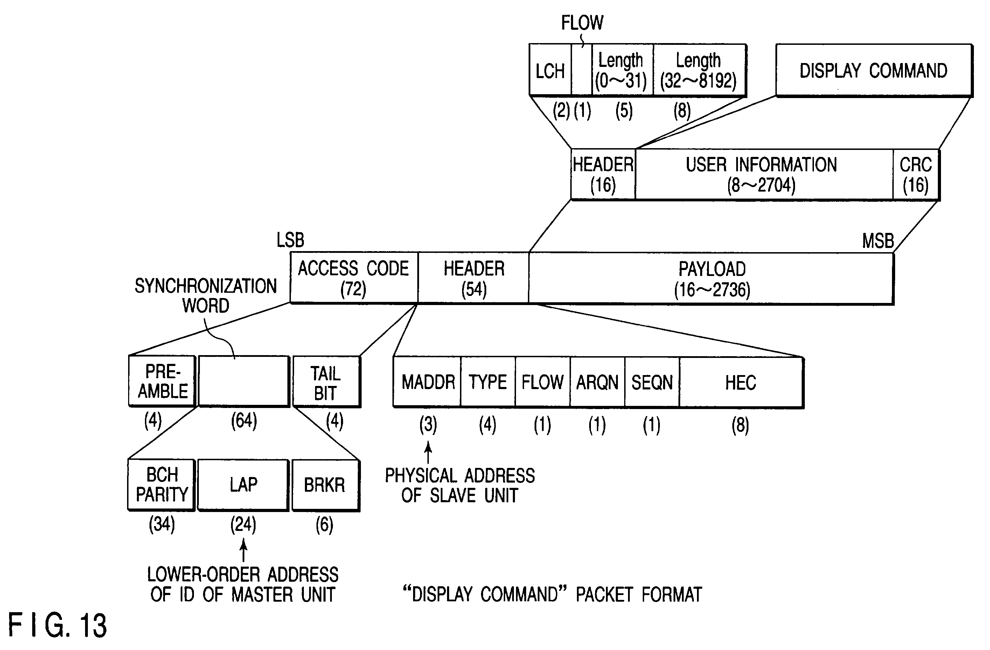

FIG. 13 shows an example of a format of this display command packet. That is, into the synchronization word of the access code the lower-order address of the ID of the master radio terminal AM is inserted and, into a destination field of a header, physical addresses of the respective slave radio terminals AS1 to AS3 are inserted. Further, into the user information field of a payload a display command is inserted.

The master radio terminal AM, upon receipt of the 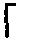 display command 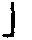 packet, deciphers the contents of the received 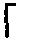 display command 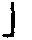 packet at the BT radio section 5. The deciphered information is transferred to the main controller 21 to hold it in the internal memory and to display it on LCD 34. It is effective to turn on a light emitting diode. At this time, it may be possible to generate a sound from the speaker. If this is so done, the user or system administrator can readily confirm the presence of the master radio terminal AM from a distance.

The master radio terminal AM transfers the received 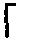 display command 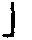 packet to the respective slave radio terminals AS1 to AS3 connected thereto. Since, at this time, a radio link is already established between the self master radio terminal AM and the respective slave radio terminal (AS1 to AS3), the master radio terminal AM transfers the 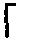 display command 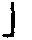 packet by a predetermined slot via this radio link. The transfer of this display command is effected, for example, in accordance with the SC0 link connection procedure.

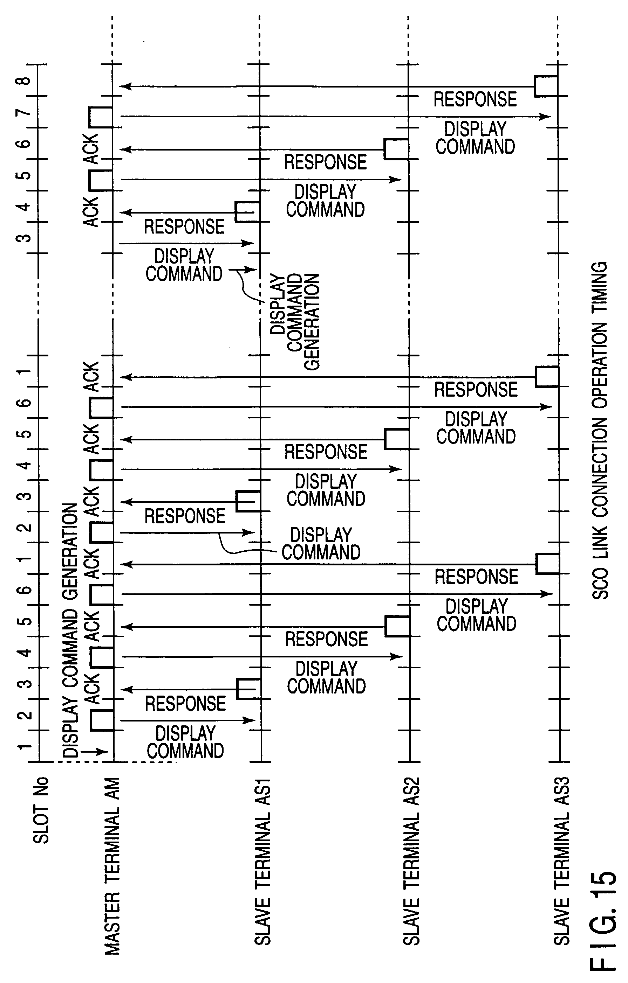

FIG. 15 is a sequence diagram showing its procedure. That is, the master radio terminal AM sequentially sends the display command to the respective slave radio terminals AS1 to AS3 with the use of an even slot and the respective slave radio terminals AS1 to AS3, upon receipt of the display command, send a 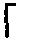 display command 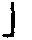 response packet back to the master radio terminal AM with the use of an odd slot.

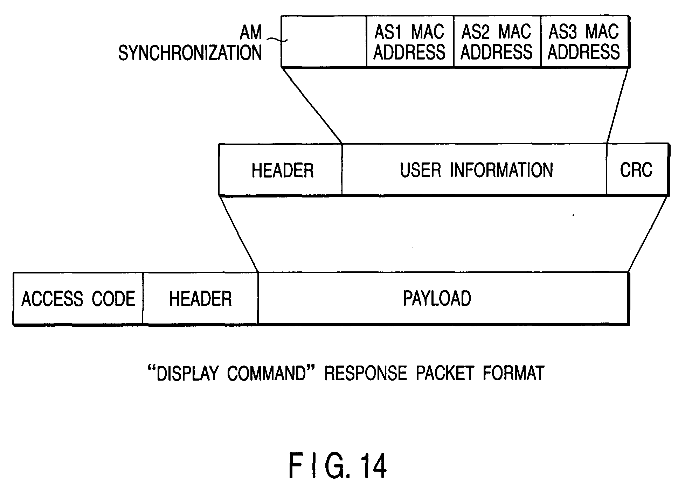

FIG. 14 shows one example of this 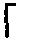 display command 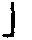 response packet. It is possible to transfer the display command from the master radio terminal AM to the respective slave radio terminal AS1 to AS3 by the ACL link connection operation.

In the respective slave radio terminals AS1 to AS3, when the 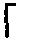 display command 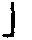 packet is received, control is so effected as to allow their function to be displayed on their own LCD 34 in accordance with the request contents. In this case, the function means that the terminal serves as slave terminal.

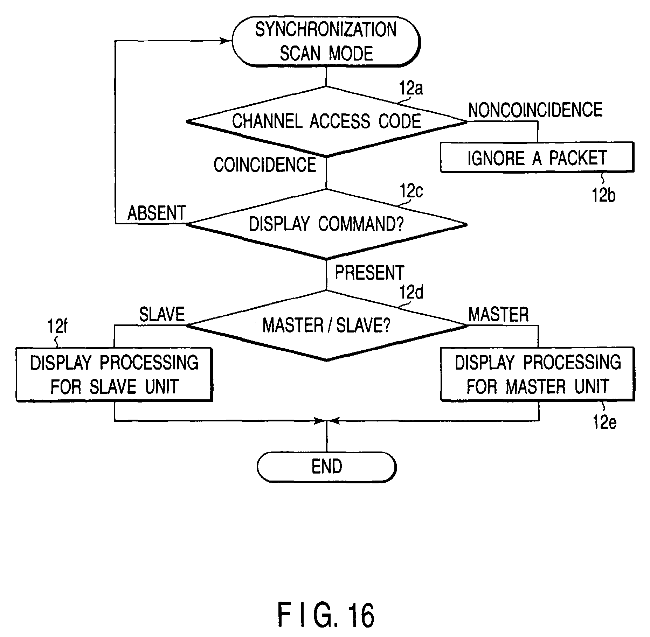

FIG. 16 is a flow chart showing its procedure and contents. That is, upon receipt of the 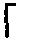 display command 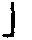 packet, the master radio terminal AM and slave radio terminals AS1 to AS3 decide whether or not it corresponds to their own belonging piconet PA-destination packet on the basis of the synchronization word contained in the access code, at step 12. If it does not correspond to their own belonging piconet PA-destination packet, then the received packet is discarded at step 12b. If it correspond to their own belonging piconet PA-destination packet, it is decided whether or not the display command is contained in the user information field at step 12c. If the display command is contained, then at step 12d it is decided whether or not the self terminal currently functions as a master terminal or as a slave terminal and, in accordance with a result of decision, control is so made as to display its master or slave status at steps 12e and 12f.

In the radio terminal AM functioning as a master terminal, for example, a light emitting element such as a light emitting diode is keep lighting. On the other hand in the respective slave radio terminals AS1 to AS3, a light emitting diode is flashed on and off. By doing so, the user or system administrator can distinguish the master radio terminal AM from the respective slave radio terminals AS1 to AS3 at first sight. In this case, a flashing on/off cycle may be made different for the respective slave radio terminals AS1 to AS3. By doing so, it is possible to distinguish the master terminal from the slave terminal and also distinguish these slave terminals from one another.

As the display mode, for example, different display colors may be considered to distinguish the master terminal from the slave terminal and a combination of the lighting of the light emitting element and sound generation from the speaker may also be considered to distinguish the master terminal from the slave terminal.

Further, the display of the location and function of these radio terminals is erased by sending a display cancellation command from the user or system administrator. Or at the elapsing of a predetermined time the respective radio terminal user may erase it on his or her own judgment.

Incidentally, the present invention is not restricted to the above-mentioned embodiment and various embodiments as will be set out below may be considered.

That is, an explanation has been made about the embodiment in which, to the piconet PA already subscribed by radio terminals AM, AS1 to AS3, an enquiry packet is transmitted from a newly subscribing radio terminal TA and, by doing so, the information of the piconet PA is collected. The present invention is not restricted thereto. For example, to a first radio terminal not connecting any piconet, an enquiry packet is transmitted from a separate second radio terminal and the second radio terminal receives an FHS packet sent back from the first radio terminal. By doing so, it may be possible to extract a synchronization word or ID address from the FHS packet and display it.

At this time, in the second radio terminal, access is gained using the synchronization word or ID address, as a key, extracted from the FHS packet. By doing so, character data representing a vendor name or kind name of the corresponding radio terminal may be read out and displayed.

Thus, even if the radio terminals are in a one-to-one relation, the radio terminal can obtain the information on the other party's radio terminal and display it and, by doing so, it is possible to confirm the presence of the other party's radio terminal before a connection link is established. As the connection examples in this case, there are cases where a cellular phone set is connected to a personal computer; a periphery unit such as a printer and mouse is connected to a personal computer; a keyboard or digital camera is connected to a cellular phone set; an earphone or headphone is connected to an audio player; and so on.

In the above-mentioned embodiment, access is gained at the enquiry-side radio terminal to the memory section on the basis of the synchronization word and ID address extracted from the received FHS packet and, by doing so, the character data representing the vendor name and kind name of the corresponding radio terminal is read out and displayed.

However, the present invention is not restricted thereto. In a radio terminal receiving an enquiry packet, for example, character data representing its own vendor name and kind name is read out and, with the data inserted into a payload of an FHS packet, transmitted to an enquiring-side radio terminal and, in the enquiring-side radio terminal, it may be possible to extract the character data representing the vendor name and kind name from the received FHS packet and display it.

By doing so, it is only necessary to store, in the respective radio terminal, character data representing its own vendor name and kind name and this obviates the need to have a conversion table at other plural radio terminals which converts their synchronization word and ID address to character data representing vendor name and kind name. For this reason it is possible to simplify the elements constituting the terminal and management of the conversion table.

When a 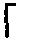 display command 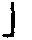 packet is delivered from the master radio terminal AM to the respective slave radio terminals AS1 to AS3, a 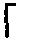 display command 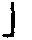 response packet sent from the respective slave radio terminals AS1 to AS3 back to the master radio terminal AM is sent from the master radio terminal AM further back to the radio terminal TA of a 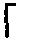 display command 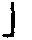 packet transmitting side as shown in FIG. 12. By doing so, at the radio terminal TA, the synchronization word contained in the sent-back response packet and ID address, etc., of the radio terminal of a sending-back side may be extracted and displayed.

By doing so, the radio terminal TA can reconfirm the configuration of a piconet subscribed thereby and it is possible to grasp the presence or absence, etc., of the radio terminal in a state of a communication failure resulting from the interference noise.

Although, in the above-mentioned embodiment, the radio terminal TA has been explained as transmitting the 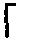 display command 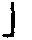 packet to the piconet PA subscribed/registered thereby and, by doing so, confirming its own registration done, the present invention is not restricted thereto. For example, any radio terminal transmits a 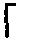 display command 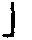 packet to any other piconet not subscribed thereby and, by doing so, it may be possible to let respective radio terminals in said other piconet to display their function in its own judgment.

By doing so, the user of the radio terminal TA or system administrator of its radio network can all grasp the configuration of a respective piconet and function of its associated radio terminal or units by using any given radio terminal (TA). This is very effective from the standpoint of the service and management.

Further, the procedure and contents of the enquiry control sequence, subscription/registration control sequence and display request sequence, the kind and configuration of the radio terminal, the display contents and display formats of the piconet information, and so on, can be changed or modified without departing from the spirit and scope of the present invention.

## Claims

1. A network system having a plurality of terminals (AM), (AS1-AS3) for performing radio communications, characterized by comprising:
a first terminal (TA), which has not connected with the network (PA) yet, providing means (21a) for transmitting enquiry information to a second terminal (AM) which has already been connected with the network (PA) in order to enquire attribute information of the second terminal (AM);
the second terminal (AM) providing means (21a) for sending response information containing its own attribute information back to the first terminal (TA);
the first terminal (TA) further providing means (21a) for receiving the response information sent back from the second terminal (AM), and means (21b) for displaying information representing configuration of the network (PA) on the basis of the received attribute information.

2. The first terminal (TA) according to claim 1, characterized by further comprising means (21) for performing connection with the network (PA) on the basis of the received information from the second terminal (AM).

3. A terminal, which is capable to connect with a network (PA) having a plurality of terminals (AM), (AS1-AS3) for performing radio communication, the terminal (TA) characterized by comprising:
means (21a) for transmitting enquiry information to a terminal (AM), which has already been connected with the network (PA) in order to enquire attribute information of the connected terminal;
means (21a) for receiving response information sent from the connected terminal (AM); and
means (21b) for displaying information representing configuration of the network (PA) on the basis of the received attribute information contained in the response information.

4. The terminal (TA) according to claim 3, characterized in that the display means (34) displays the received attribute information of the connected terminal (AM).

5. The terminal (TA) according to claim 3, characterized by further comprising:
a conversion table (26) showing a relationship between an identification code of the connected terminal (AM) and character data representing the attribute information of the connected terminal (AM);
means (21b) for converting into the identification code of the connected terminal (AM) into character data representing the attribute information of the connected terminal by referring the conversion table in case that the response signal includes the identification code of the other terminal; and
means (34) for displaying the character data.

6. A terminal (AM), which is capable to connect with a network (PA) having a plurality of terminals (AM), (AS1-AS3) for performing radio communication, the terminal (AM) characterized by comprising:
means (21b) for receiving enquiry information transmitted from an enquiring terminal (TA) which has not connected with the network (PA) yet;
means (26) for storing character data representing its own attribute information; and
means (21a) for sending response information containing the character data to the enquiring terminal (TA) which transmitted enquiry information.

7. The terminal (TA) according to claim 3, characterized by further comprising:
means (26) for storing the received attribute information contained in the response information sent back from the connected terminal (AM);
means (5) for performing a connection with the network (PA) on the basis of the stored information.

8. A terminal, which is applied to a network having a plurality of terminals (AM), (AS1-AS3) for performing radio communication, one of the these terminals serving as a master terminal (AM) and at least one remaining terminal serving as a slave terminal (AS1-AS3), the terminal characterized by comprising:
means (21c) for receiving a request signal transmitted from an enquiring terminal which has already connected with the network (PA); and
means (21c) for showing information indicate whether the terminal serves as the master terminal (AM) or the slave terminal (AS1-AS3).

9. The terminal according to claim 8, characterized by further comprising,
means (21c) for transmitting an signal to the enquiring terminal which transmitted the request signal, the includes information representing at least attribute information of the terminal.

10. A terminal, which is applied to a system constituting networks relative to a plurality of terminals in accordance with a predetermined radio communication protocol, the terminal characterized by comprising:
means (21a) for collecting attribute information of an candidate terminal (AM) which is likely to be connected with the terminal;
means (21b) for displaying the collected attribute information.

11. The terminal according to claim 10, characterized in that the display means (34) classifies the collected attribute information by the network (PA) which the candidate terminal is belonged to and displays the classified collected attribute information.

12. The terminal according to claim 10, characterized in that the predetermined radio communication protocol is Bluetooth.

13. A terminal, which is applied to a system constituting networks relative to a plurality of terminals (AM), (AS1-AS3) in accordance with a predetermined radio communication protocol, the terminal, characterized by comprising:
means (21a) for receiving enquiry information transmitted from an enquiring terminal, which enquires attribute information of the terminal (AM);
means (26) for storing character data representing attribute information of the terminal (AM);
means (21a) for sending response information containing the character data to the enquiring terminal.
